# EUROPÄISCHE PATENTANMELDUNG

(11) **EP 2 426 800 A1**
(43) Veröffentlichungstag der Anmeldung: **07.03.2012**
(21) Anmeldenummer: 11179005.1
(22) Anmeldetag: 26.08.2011
(51) Int. Cl.: H02G 3/04

(54) **Elektroinstallationsrohr mit wenigstens einer Datenleitung**

(30) Priorität: 07.09.2010 DE 102010040334
(71) Anmelder: FRÄNKISCHE ROHRWERKE Gebr. Kirchner GmbH & Co. KG, 97486 Königsberg (DE)
(72) Erfinder: Kirchner, Otto, 97486 Königsberg (DE); Beck, Frank, 97486 Königsberg (DE); Biener, Norbert, 97475 Zeil am Main (DE)
(74) Vertreter: Herzog, Markus

(57) **Zusammenfassung**

Die Erfindung betrifft ein Elektroinstallationsrohr (210) mit wenigstens einer Leitung (218) zur Übertragung von Daten, und Haltemitteln (222a), die die wenigstens eine Leitung (218) an der Wandung des Elektroinstallationsrohrs (210) hält.

## Beschreibung

Die Erfindung betrifft ein Elektroinstallationsrohr, wie es im Mauerwerk von Gebäuden verlegt wird, um Elektroinstallationsleitungen aufzunehmen.

Nicht nur in Bürogebäuden, sondern auch in Privathäusern und -wohnungen steigt der Bedarf, neben Elektroinstallationsleitungen auch Datenleitungen vorzusehen. Hierzu sind bislang immer noch unabhängige Installationsarbeiten erforderlich.

Es ist daher Aufgabe der vorliegenden Erfindung, ein Elektroinstallationsrohr anzugeben, welches es ermöglicht, die Datenleitungen ohne zusätzlichen Installationsaufwand vorzusehen.

Diese Aufgabe wird erfindungsgemäß gelöst durch ein Elektroinstallationsrohr mit wenigstens einer Leitung zur Übertragung von Daten und Haltemitteln, die die wenigstens eine Leitung an der Wandung des Elektroinstallationsrohrs fixieren. Die Daten können dabei in ein Computernetzwerk zu übermittelnde Daten, Telefondaten, d.h. zur Übertragung eines Telefongesprächs zu übermittelnde Daten, oder Fernseh-/Rundfunkdaten, d.h. zur Übertragung einer Fernseh- oder Rundfunksendung zu übermittelnde Daten, sein.

Bereits an dieser Stelle sei arauf hingewiesen, dass das Elektroinstallationsrohr vorzugsweise als Wellrohr ausgebildet ist. Grundsätzlich ist es jedoch auch denkbar, die Erfindung bei glattwandigen Elektroinstallationsrohren anzuwenden. Ferner kann das Wellrohr ein Verbundwellrohr sein, das ein als Wellrohr ausgebildetes Außenrohr und ein Innenrohr umfasst, das entweder ebenfalls als Wellrohr ausgebildet ist, allerdings mit einer niedrigeren Amplitude der Wellung, oder als im Wesentlichen glattwandiges Rohr. Aufgrund ihrer Flexibilität eignen sich Leitungen, die wenigstens eine polymere optische Faser umfassen, so genannte POF-Leitungen, besonders gut zur Verwendung als Datenleitung. Die POF-Leitung kann dabei ein- oder mehradrig sein, beispielsweise zweiadrig.

Die Haltemittel können wenigstens eine Klebestelle umfassen, welche die Leitung an dem Elektroinstallationsrohr hält. Vorzugsweise wird man die Leitung mittels einer Mehrzahl derartiger Klebestellen an dem Elektroinstallationsrohr halten. Damit das Biegeverhalten des Elektroinstallationsrohrs durch die Leitung nicht allzu sehr beeinträchtigt wird, kann man das Elektroinstallationsrohr im Bereich von Biegungen derart orientieren, dass sich die Leitung auf der neutralen Biegelinie des Elektroinstallationsrohrs befindet.

Zusätzlich oder alternativ kann die wenigstens eine Leitung aber auch mittels eines Überzugs, der das Elektroinstallationsrohr umgibt, an diesem gehalten werden. Der Überzug kann dabei von einer separaten Kunststoffschicht gebildet sein, die mit einem an sich bekannten Verfahren, beispielsweise dem sogenannten Inline-Verfahren, auf das Elektroinstallationsrohr aufgebracht wird. Der Überzug kann sich dabei über die gesamte Länge des Elektroinstallationsrohrs erstrecken oder auch nur längenabschnittsweise. Ja er kann sogar die Form von einzelnen Halteklammern annehmen, die nachträglich um das Elektroinstallationsrohr herum gelegt werden.

In Weiterbildung der Erfindung wird vorgeschlagen, dass es in wenigstens einem Umfangsabschnitt eine zum Innenraum oder zur äußeren Umgebung des Elektroinstallationsrohrs hin offene Einbuchtung zur Aufnahme wenigstens einer Leitung aufweist. In diesem Fall kann die Datenleitung durch das Elektroinstallationsrohr sehr gut vor äußeren Einflüssen geschützt werden, insbesondere mechanischen Einwirkungen beim Verlegen des Elektroinstallationsrohrs im Mauerwerk. Als nachteilig an dieser Ausführungsvariante könnte allerdings die durch das Einbringen der Datenleitung in das Lumen des Elektroinstallationsrohrs geringfügig aufwendigere Herstellung angesehen werden.

Ist dass Elektroinstallationsrohr ein Wellrohr, so kann wenigstens ein Teil der Wellentäler des Elektroinstallationsrohrs, vorzugsweise alle Wellentäler des Elektroinstallationsrohrs, in wenigstens einem Umfangsabschnitt eine zum Innenraum des Elektroinstallationsrohrs hin offene Einbuchtung zur Aufnahme wenigstens einer Leitung aufweisen. Zusätzlich oder alternativ kann aber auch vorgesehen sein, dass wenigstens ein Teil der Wellenberge des Elektroinstallationsrohrs, vorzugsweise alle Wellenberge des Elektroinstallationsrohrs, in wenigstens einem Umfangsabschnitt eine zur äußeren Umgebung des Elektroinstallationsrohrs hin offene Einbuchtung zur Aufnahme wenigstens einer Leitung aufweisen. Bei dieser letztgenannten Ausführungsvariante kann die Datenleitung in einfacher Weise nachträglich in die Einbuchtung eingelegt werden, was die Herstellung des erfindungsgemäßen Elektroinstallationsrohrs erleichtert. Darüber hinaus hat es sich gezeigt, dass die Tatsache, dass die Datenleitung in die Einbuchtung eingelegt wird, einen ausreichenden Schutz der Datenleitung vor äußeren Einflüssen bietet, insbesondere mechanischen Einwirkungen beim Verlegen des Elektroinstallationsrohrs im Mauerwerk.

Im Hinblick auf die Flexibilität des Elektroinstallationsrohrs ist es in beiden Ausführungsvarianten vorteilhaft, wenn sich die wenigstens eine Einbuchtung bei wenigstens einem Teil der Wellenberge bzw. Wellentäler über lediglich einen Teil der Höhe bzw. Tiefe des jeweiligen Wellenbergs bzw. Wellentals erstreckt.

Um dies sicherstellen zu können, aber auch, um bei Elektroinstallationsrohren, deren Amplitude der Wellung kleiner ist als die Höhe der Datenleitung, ausreichend Raum für das Vorsehen der Einbuchtung bereitstellen zu können, kann der Querschnitt des Lumens des Elektroinstallationsrohrs der Einbuchtung benachbart reduziert sein, d.h. der Einbuchtung benachbart ist die Amplitude der Wellung des Elektroinstallationsrohrs verglichen mit dem restlichen Umfang des Elektroinstallationsrohrs erhöht, und zwar vorzugsweise unter Beibehaltung der Außenkontur des Elektroinstallationsrohrs. Das heißt, man schafft zwischen dem von den Spitzen der nach außen weisenden Wellungsmaxima definierten Außenumfang des Elektroinstallationsrohrs und dem von den Spitzen der nach innen weisenden Wellungsminima definierten Innenumfang des Elektroinstallationsrohrs ausreichend Querschnittsfläche zum Vorsehen der Einbuchtung.

Vorteilhafterweise kann die Einbuchtung hinterschnitten ausgebildet sein. In diesem Fall kann die Einbuchtung selbst, genauer gesagt deren Hinterschneidungen, die Haltemittel für die Datenleitung bilden. Zusätzlich oder alternativ kann die wenigstens eine Leitung aber auch mittels wenigstens eines gesonderten Halteelements in der Einbuchtung gehalten sein, beispielsweise mittels des vorstehend bereits erwähnten Überzugs, der das Elektroinstallationsrohr umgibt, oder der anderen vorstehend genannten Haltemittel.

Um das Lumen des Elektroinstallationsrohrs für nachträgliche Installationen freihalten zu können, wird in Weiterbildung der Erfindung vorgeschlagen, dass es ferner wenigstens eine Leitung zur Übertragung von Energie umfasst, die vorzugsweise ebenfalls in wenigstens einer Einbuchtung angeordnet ist, wie sie vorstehend für die Aufnahme der Datenleitung beschrieben worden ist.

Die Erfindung wird im Folgenden an Ausführungsbeispielen anhand der beigefügten Zeichnung näher erläutert werden. Es stellt dar:

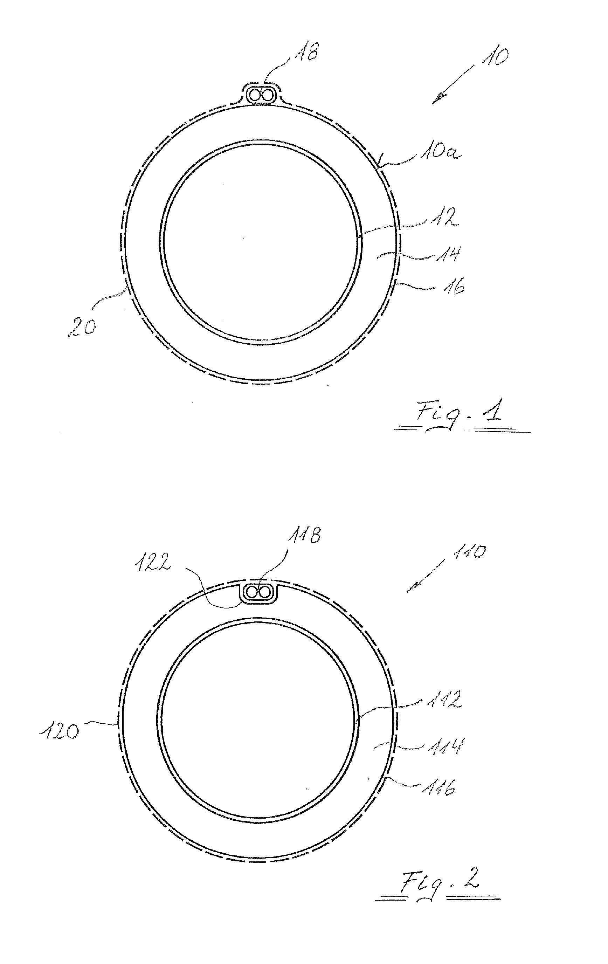

- Figuren 1 bis 5:: Schematische Querschnittsdarstellungen verschiedener Ausführungsformen des erfindungsgemäßen Elektroinstallationsrohrs.

In Fig. 1 ist ein erfindungsgemäßes Elektroinstallationsrohr ganz allgemein mit 10 bezeichnet. An dieser Stelle sei darauf hingewiesen, dass, obgleich die Erfindung auch an glattwandigen Elektroinstallationsrohr verwirklicht sein kann, sie nachstehend am Beispiel von Wellrohren erläutert werden wird. So ist in Fig. 1 das als Wellrohr ausgeführte Elektroinstallationsrohr 10 in einem Querschnitt dargestellt, der durch den tiefsten Punkt eines Wellentals verläuft. Daher erkennt man die Schnittfläche des tiefsten Punkts des Wellentals bei 12 und die Ansicht der sich daran anschließenden Halbwelle bei 14.

Auf die Außenumfangsfläche 10a des Wellrohrs, die von den Spitzen 16 der Wellenberge gebildet wird, ist eine Datenleitung 18 aufgelegt, die in dem dargestellten Ausführungsbeispiel von einer zweiadrigen POF-Leitung (**p**olymere **o**ptische **F**aser) gebildet ist. Diese POF-Leitung 18 wird mittels eines Überzugs 20, der in Fig. 1 lediglich gestrichelt angedeutet ist, am Wellrohr 10 gehalten. Der Überzug 20 kann sich über die gesamte Länge des Wellrohrs 10 erstrecken. Er kann jedoch auch lediglich abschnittsweise vorgesehen sein. Ja er kann sogar von gesonderten Halteelementen, beispielsweise Halteklammern, gebildet sein, die um das Wellrohr herum angeordnet werden.

In Fig. 2 ist eine zweite Ausführungsform eines erfindungsgemäßen Wellrohrs dargestellt, die im Wesentlichen der Ausführungsform gemäß Fig. 1 entspricht. In Fig. 2 sind daher analoge Teile mit den gleichen Bezugszeichen versehen wie in Fig. 1, jedoch vermehrt um die Zahl 100. Ferner wird das Wellrohr 110 im Folgenden nur insoweit beschrieben werden, als es sich vom Wellrohr 10 gemäß Fig. 1 unterscheidet, auf dessen Beschreibung hiermit ausdrücklich verwiesen sei.

Das Wellrohr 110 gemäß Fig. 2 unterscheidet sich von dem Wellrohr 10 gemäß Fig. 1 dadurch, dass in die Wellung 114 vom Außenumfang 116 her eine Einbuchtung 122 in das Wellrohr 110 eingebracht ist, in die die POF-Leitung 118 eingelegt ist. Die Einbuchtung 122 erstreckt sich in dem dargestellten Ausführungsbeispiel nicht vollständig bis zum Wellental 112. Grundsätzlich könnte sie sich jedoch bis zum Wellental 112 erstrecken, was allerdings mit stärkeren Einbußen an Flexibilität des Wellrohrs 110 einhergehen würde. Die POF-Leitung 118 ist mittels eines Überzugs 120 in der Einbuchtung 122 gehalten. Für den Überzug 120 gilt das zu Fig. 1 über den Überzug 20 Gesagte ebenfalls.

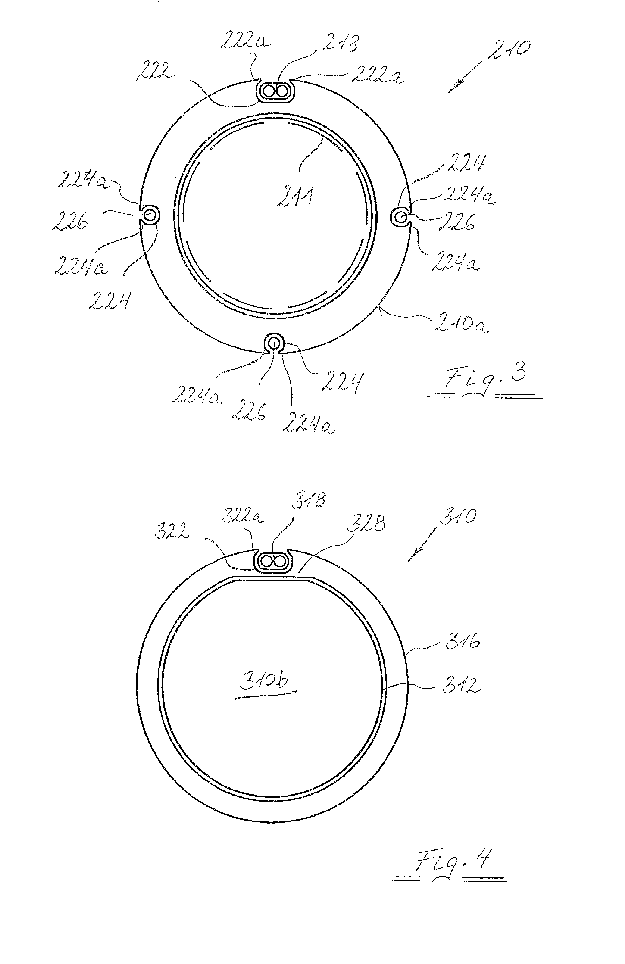

In Fig. 3 ist eine weitere erfindungsgemäße Ausführungsform dargestellt, welche im Wesentlichen der Ausführungsform gemäß Fig. 2 entspricht. Daher sind in Fig. 3 analoge Teile mit den gleichen Bezugszeichen versehen wie in Fig. 2, jedoch vermehrt um die Zahl 100, also bezogen auf Fig. 1 vermehrt um die Zahl 200. Darüber hinaus wird das Wellrohr 210 gemäß Fig. 3 im Folgenden nur insoweit beschrieben werden als es sich von dem Wellrohr 110 gemäß Fig. 2 unterscheidet, auf dessen Beschreibung hiermit einschließlich der Verweise und Bezugnahmen auf die Beschreibung der Ausführungsform gemäß Fig. 1 verwiesen sei.

Das Wellrohr 210 gemäß Fig. 3 unterscheidet sich von dem Wellrohr 110 gemäß Fig. 2 zum einen dadurch, dass die Einbuchtung 222, in die die POF-Leitung 218 eingelegt ist, hinterschnitten ausgebildet ist, wie dies in Fig. 3 bei 222a angedeutet ist. Mit Hilfe dieser Hinterschneidungen 222a kann die POF-Leitung 218 in der Einbuchtung 222 gehalten werden. Es braucht also nicht notwendigerweise ein Überzug entsprechend dem Überzug 120 der Ausführungsform gemäß Fig. 2 vorgesehen zu werden. Ein derartiger Überzug kann aber gewünschtenfalls als zusätzliche Sicherung der POF-Leitung 218 in der Einbuchtung 222 eingesetzt werden.

Das Wellrohr 210 gemäß Fig. 3 unterscheidet sich von dem Wellrohr 210 gemäß Fig. 2 zum anderen auch dadurch, dass weitere Einbuchtungen 224 vorgesehen sind, in denen weitere Leitungen 226 aufgenommen sind, beispielsweise Leitungen zur Übertragung von Energie, insbesondere elektrischem Strom. Auch die Einbuchtungen 224 können, wie bei 224a angedeutet, hinterschnitten ausgebildet sein. Grundsätzlich ist es jedoch auch denkbar, die weiteren Leitungen 226 auf den Außenumfang 210a des Wellrohrs 210 aufzulegen oder in eine nicht hinterschnittene Einbuchtung einzulegen und dort mittels eines Überzugs analog dem Überzug 20 bzw. 120 an dem Wellrohr 210 zu halten.

In Fig. 4 ist eine weitere Ausführungsform eines erfindungsgemäßen Wellrohrs dargestellt, die im Wesentlichen der Ausführungsform gemäß Fig. 3 entspricht. Daher sind in Fig. 4 analoge Teile mit den gleichen Bezugszeichen versehen wie in Fig. 3, jedoch vermehrt um die Zahl 100, also verglichen mit Fig. 2 vermehrt um die Zahl 200 und verglichen mit Fig. 1 vermehrt um die Zahl 300. Darüber hinaus wird die Ausführungsform gemäß Fig. 4 im Folgenden nur insoweit beschrieben werden, als sie sich von der Ausführungsform gemäß Fig. 3 unterscheidet, auf deren Beschreibung hiermit ansonsten einschließlich der Verweise und Bezugnahmen auf die Figuren 1 und 2 verwiesen sei.

Das Wellrohr 310 unterscheidet sich von dem Wellrohr 210 gemäß Fig. 3 hauptsächlich dadurch, dass seine Wellung eine geringere Amplitude zwischen den Spitzen der Wellenberge 316 und Wellentäler 312 aufweist. Daher würde die Einbuchtung 322, in der die POF-Leitung 318 aufgenommen ist, bis zu den Wellentälern 312 hinabreichen bzw. sogar darüber hinaus in das Lumen 310b des Wellrohrs 310 hineinreichen und somit das Wellrohr schlitzen. Um dies zu vermeiden, ist der Querschnitt des Lumens 310b der Einbuchtung 322 benachbart reduziert, wie man dies in Fig. 4 bei 328 erkennt, d.h. der Einbuchtung 322 benachbart ist die Amplitude der Wellung des Wellrohrs 310 verglichen mit dem restlichen Umfang des Wellrohrs 310 erhöht, und zwar vorzugsweise unter Beibehaltung der Außenkontur des Wellrohrs 310.

Obgleich dies in Fig. 4 für den Fall einer mit Hinterschneidungen 322a versehenen Einbuchtung dargestellt ist, kann das Prinzip der umfangsabschnittsweisen Erhöhung der Wellungsamplitude auch bei nicht hinterschnittenen Einbuchtungen angewendet werden, wie sie beispielsweise bei der Ausführungsform gemäß Fig. 2 vorhanden sind. Darüber hinaus kann dieses Prinzip auch bei den Einbuchtungen für weitere Leitungen angewendet werden, wie sie beispielsweise bei der Ausführungsform gemäß Fig. 3 vorhanden sind. Selbstverständlich kann auch im Fall der Ausführungsform gemäß Fig. 4 die POF-Leitung 318 zusätzlich von einem Überzug entsprechend dem Überzug 20 bzw. 120 in der Einbuchtung 322 gehalten werden.

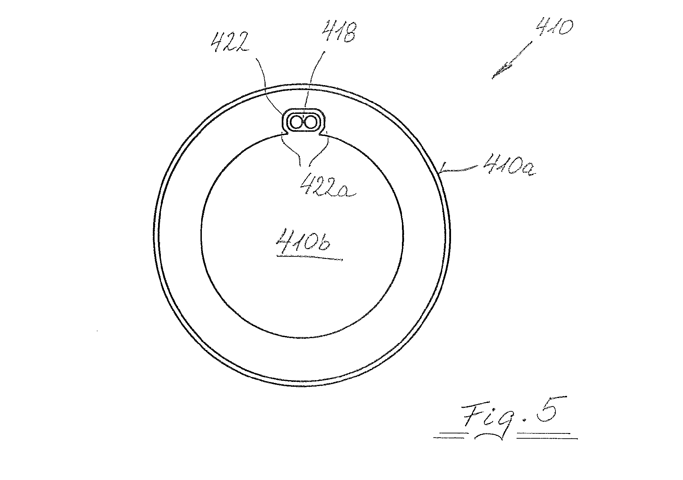

In Fig. 5 ist eine weitere Ausführungsform eines erfindungsgemäßen Wellrohrs dargestellt, die im Wesentlichen der Ausführungsform gemäß Fig. 3 entspricht. Daher sind in Fig. 5 analoge Teile mit den gleichen Bezugszeichen versehen wie in Fig. 3, jedoch erhöht um die Zahl 200, d.h. verglichen mit Fig. 1 um die Zahl 400, verglichen mit Fig. 2 um die Zahl 300 und verglichen mit Fig. 4 um die Zahl 100. Darüber hinaus wird die Ausführungsform gemäß Fig. 5 im Folgenden nur insoweit beschrieben werden, als sie sich von der Ausführungsform gemäß Fig. 3 unterscheidet, auf deren Beschreibung einschließlich der wechselseitigen Verweisen und Bezugnahmen auf die Figuren 1, 2 und 4 ansonsten ausdrücklich verwiesen sei.

Das Wellrohr 410 gemäß Fig. 5 unterscheidet sich von dem Wellrohr 210 gemäß Fig. 3 hauptsächlich dadurch, dass die Einbuchtung 422, in der die POF-Leitung 418 aufgenommen ist, nicht von der Außenseite 410a her in das Wellrohr eingebracht ist, sondern von der Innenseite bzw. dem Lumen 410b her. In dem dargestellten Ausführungsbeispiel ist die Einbuchtung 422 wiederum mit Hinterschneidungen 422a ausgebildet, die die POF-Leitung 418 in der Einbuchtung 422 halten.

Auch bei der Anordnung der Einbuchtung 422 auf der Innenseite des Wellrohrs 410 können die vorstehend für die Einbringung von der Außenseite her beschriebenen Konstruktionsprinzipien angewendet werden. Insbesondere braucht die Einbuchtung 422 nicht hinterschnitten ausgebildet zu sein (analog Fig. 2), wobei die POF-Leitung 418 dann von einer Innenauskleidung in der Einbuchtung 422 gehalten wird. Zusätzlich oder alternativ können auch weitere Leitungen auf der Innenseite des Wellrohrs 410 vorgesehen sein (analog Fig. 3). Zusätzlich oder alternativ kann die Wellungsamplitude im Bedarfsfall umfangsabschnittsweise erhöht sein (analog Fig. 4).

Schließlich ist es auch möglich, die POF-Leitung 418 und gegebenenfalls weitere Leitungen einfach auf die Innenseite des Wellrohrs 410 aufzulegen und dort mittels einer Innenauskleidung zu halten.

Nachzutragen ist noch, dass die Haltemittel auch von einer oder mehreren Klebestellen gebildet sein kann, welche die POF-Leitung an dem Wellrohr fixieren.

Was das Herstellungsverfahren des erfindungsgemäßen Wellrohrs anbelangt, verlangen die Ausführungsformen gemäß Figuren 3 und 4 die geringsten Änderungen an bereits bestehenden Anlagen zur Herstellung von Wellrohren, um diese auf die Herstellung von mit POF-Leitungen bestückten Wellrohren um- bzw. nachzurüsten. In diesen Fällen brauchen nämlich die Anlagen zur Extrusion der Wellrohre lediglich mit Formbacken ausgestattet zu werden, die die Ausbildung einer hinterschnittenen Einbuchtung berücksichtigen. Im Anschluss an die Aushärtung des zur Herstellung des Wellrohrs verwendeten Kunststoffs braucht dann nur noch die POF-Leitung zugeführt und in die Einbuchtung eingedrückt zu werden.

Nachzutragen ist noch, dass insbesondere die Wellrohre der Figuren 1 bis 4 als Verbundwellrohr ausgebildet sein können, bei dem das Wellrohr 10, 110, 210, 310 das Außenrohr bildet und das ferner, wie beispielhaft für die Ausführungsform der Figur 3 gestrichelt angedeutet ist ,ein Innenrohr 211 umfasst, das vorzugsweise als im Wesentlichen glattwandiges Rohr ausgebildet ist.

## Patentansprüche

1. Elektroinstallationsrohr (10; 110; 210; 310; 410), umfassend:
- wenigstens eine Leitung (18; 118; 218; 318; 418) zur Übertragung von Daten, und
- Haltemittel (20; 120; 222a; 322a; 422a), die die wenigstens eine Leitung (18; 118; 218; 318; 418) an der Wandung des Elektroinstallationsrohrs (10; 110; 210; 310; 410) hält.

2. Elektroinstallationsrohr nach Anspruch 1,
**dadurch gekennzeichnet, dass** es ein Wellrohr ist.

3. Elektroinstallationsrohr nach Anspruch 1 oder 2,
**dadurch gekennzeichnet, dass** wenigstens eine Leitung (18; 118; 218; 318; 418) eine POF-Leitung ist.

4. Elektroinstallationsrohr nach einem der Ansprüche 1 bis 3,
**dadurch gekennzeichnet, dass** die Haltemittel wenigstens eine Klebestelle umfassen, welche die Leitung (18; 118; 218; 318; 418) an dem Elektroinstallationsrohr (10; 110; 210; 310; 410) hält.

5. Elektroinstallationsrohr nach einem der Ansprüche 1 bis 4,
**dadurch gekennzeichnet, dass** die Haltemittel einen Überzug (20; 120) umfassen, der das Elektroinstallationsrohr (10; 110) umgibt.

6. Elektroinstallationsrohr nach einem der Ansprüche 1 bis 5,
**dadurch gekennzeichnet, dass** es in wenigstens einem Umfangsabschnitt eine zum Innenraum (410b) oder zur äußeren Umgebung des Elektroinstallationsrohrs (110; 210; 310; 410) hin offene Einbuchtung (122; 222; 322; 422) zur Aufnahme wenigstens einer Leitung (118; 218; 318; 418) aufweist.

7. Elektroinstallationsrohr nach den Ansprüchen 2 und 6,
**dadurch gekennzeichnet, dass** wenigstens ein Teil der Wellentäler des Wellrohrs (410), vorzugsweise alle Wellentäler des Wellrohrs (410), in wenigstens einem Umfangsabschnitt eine zum Innenraum (410b) des Wellrohrs (410) hin offene Einbuchtung (422) zur Aufnahme wenigstens einer Leitung (418) aufweisen.

8. Elektroinstallationsrohr nach den Ansprüchen 2 und 6 und gewünschtenfalls dem Anspruch 7,
**dadurch gekennzeichnet, dass** wenigstens ein Teil der Wellenberge des Wellrohrs (110; 210; 310), vorzugsweise alle Wellenberge des Wellrohrs (110; 210; 310), in wenigstens einem Umfangsabschnitt eine zur äußeren Umgebung des Wellrohrs (110; 210; 310) hin offene Einbuchtung (122; 222; 322) zur Aufnahme wenigstens einer Leitung (118; 218; 318) aufweisen.

9. Elektroinstallationsrohr nach Anspruch 7 oder 8,
**dadurch gekennzeichnet, dass** sich die Einbuchtung (122; 222; 322; 422) bei wenigstens einem Teil der Wellenberge bzw. Wellentäler über lediglich einen Teil der Höhe bzw. Tiefe des jeweiligen Wellenbergs bzw. Wellentals erstreckt.

10. Elektroinstallationsrohr nach einem der Ansprüche 6 bis 9,
**dadurch gekennzeichnet, dass** der Querschnitt des Lumens (310b) des Elektroinstallationsrohrs (310) der Einbuchtung (322) benachbart reduziert ist.

11. Elektroinstallationsrohr nach einem der Ansprüche 6 bis 10,
**dadurch gekennzeichnet, dass** die Einbuchtung (222; 322; 422) hinterschnitten ausgebildet ist.

12. Elektroinstallationsrohr nach einem der Ansprüche 6 bis 11,
**dadurch gekennzeichnet, dass** die wenigstens eine Leitung (18; 118) mittels wenigstens eines gesonderten Halteelements (20; 120) an dem Elektroinstallationsrohr (10; 110), vorzugsweise in dessen Einbuchtung (122), gehalten ist.

13. Elektroinstallationsrohr nach einem der Ansprüche 1 bis 12,
**dadurch gekennzeichnet, dass** es ferner wenigstens eine Leitung (226) zur Übertragung von Energie umfasst.

14. Elektroinstallationsrohr nach einem der Ansprüche 2 bis 13,
**dadurch gekennzeichnet, dass** es ein Verbundwellrohr ist, das ein als Wellrohr ausgebildetes Außenrohr und ein Innenrohr umfasst, das entweder ebenfalls als Wellrohr ausgebildet ist, allerdings mit einer verglichen mit dem Außenrohr niedrigeren Amplitude der Wellung, oder als im Wesentlichen glattwandiges Rohr.
